# FASCICULE DE BREVET EUROPEEN

(11) **EP 1 368 965 B1**
(45) Date de publication et mention de la délivrance du brevet: **08.08.2012**
(21) Numéro de dépôt: 02718263.3
(22) Date de dépôt: 15.03.2002
(51) Int. Cl.: H04N 5/225, H04N 5/217, H04N 5/369

(54) **PROCEDE ET DISPOSITIF DE PRISE D'IMAGE ELECTRONIQUE EN PLUSIEURS ZONES**
VERFAHREN UND VORRICHTUNG ZUR ELEKTRONISCHEN AUFNAHME EINES BILDES IN MEHREREN TEILEN
METHOD AND DEVICE FOR ELECTRONIC IMAGE SENSING IN SEVERAL ZONES

(30) Priorité: 16.03.2001 FR 0103627
(43) Date de publication de la demande: 10.12.2003
(73) Titulaire: THALES ELECTRON DEVICES S.A., 78140 Vélizy (FR)
(72) Inventeur: MARCHE, Eric Thales Intellectual Property, F94117 Arcueil cedex (FR)
(74) Mandataire: Lucas, Laurent Jacques
(86) Numéro de dépôt international: PCT/FR2002/000938
(87) Numéro de publication internationale: WO 2002/076089

(56) Documents cités:
- EP-A- 1 111 909
- US-A- 5 737 015
- US-A- 6 072 603

## Description

L'invention concerne les capteurs d'image électroniques, que ces images soient visibles, infrarouge, radiologiques, etc.

Elle concerne plus particulièrement les capteurs d'image qui, en raison notamment des performances désirées en termes de résolution, dynamique de signal, et rapidité de fonctionnement, nécessitent l'utilisation de capteurs matriciels photosensibles divisés en plusieurs zones fournissant chacune un signal respectif qui doit être combiné avec les signaux des autres zones pour fournir une image complète d'une scène.

Une application de tels capteurs est notamment la prise de vue radiologique, soit directe (capteurs matriciels photosensibles recouverts d'un scintillateur), soit indirecte (capteur matriciel en sortie d'un tube intensificateur d'image radiologique). Typiquement, dans le cas d'un capteur en sortie d'un tube intensificateur, pour avoir des images en temps réel (30 images par seconde), avec une très forte dynamique (jusqu'à au moins 150 000 électrons par point d'image) et une haute résolution (au moins 1000 x 1000 points), il s'avère nécessaire de diviser la surface sensible en deux ou quatre (ou plus encore) zones d'image. Le capteur matriciel a autant de sorties qu'il y a de zones. Ces sorties fournissent par exemple des signaux à une cadence de 20 MHz ; s'il n'y avait qu'une sortie, il faudrait multiplier la cadence de sortie par deux, ou quatre, ou plus, mais c'est difficile si la dynamique est forte, le temps de transfert de grandes quantités d'électrons étant élevé.

Les signaux électroniques issus des différentes zones transitent par des voies différentes jusqu'à ce qu'ils soient réunis en un flot de données numériques représentant la totalité de l'image. Ces voies sont théoriquement identiques mais peuvent avoir de légères différences (différentes sensibilités, différents coefficients d'amplification, différentes tensions de décalage, etc.). il en résulte qu'une image globale uniforme fera clairement apparaître des transitions visibles entre zones alors que ces transitions n'existent pas dans l'image originale. Ces transitions sont visibles sur une image uniformément grise : on voit un damier là où on ne devrait voir qu'une surface uniforme. Mais elles sont aussi visibles sur une image quelconque, l'oeil étant particulièrement sensible à des transitions de niveau corrélées. Ici les transitions sont corrélées en ce sens que bien que l'image globale soit quelconque, les changements de niveau de gris, même très légers (moins de 1% de différence de niveau), se situent sur des lignes de frontière, en général droites. L'oeil repère immédiatement ces transitions anormales dans une image qui n'a a priori pas de raison de les comporter.

On a déjà proposé de corriger ce phénomène en faisant passer le signal issu du capteur, sous forme analogique, dans des circuits de correction non linéaires, corrigeant des non-linéarités du premier ordre des différentes voies. Cette solution est coûteuse en circuiterie, et peu précise. Elle ne peut pas corriger des non-linéarités de formes complexes.

Une autre solution pourrait être, dans le cas d'une conversion analogique-numérique du signal issu du capteur et d'un traitement numérique ultérieur, de considérer une première voie de traitement comme voie de référence ; les autres voies seraient des voies à corriger et comporteraient chacune une table de correction numérique dont le contenu compenserait les différences entre cette voie et la voie de référence. Les signaux de la voie de référence sont transmis tels quels, et les signaux des voies à corriger sont modifiés par les tables de correction respectives avant d'être regroupés avec les signaux de la voie de référence pour reconstituer une image globale regroupant les différentes zones.

La table de correction, ou « look-up-table » en anglais, est une mémoire qui, à chaque valeur numérique représentant un niveau de signal, fait correspondre une valeur corrigée. On peut corriger ainsi très finement toutes les différences de sensibilité, les non-linéarités, ou encore les décalages de niveau, entre les différentes voies.

La constitution du contenu des différentes tables de correction se fera alors en principe en usine, à partir de mires d'échelles de gris permettant de détecter, pour chaque niveau de gris, quel est le comportement de chaque voie de traitement de signal, de manière que pour n'importe quel niveau de gris, la valeur numérique finale en sortie soit la même quelle que soit la voie de traitement.

La procédure de constitution de ces tables de correction, différentes d'un zone d'image à une autre, et différentes d'un produit à l'autre car on ne maîtrise pas en production tous les paramètres qui engendrent les petites différences entre voies, est lourde et coûteuse. En outre, elle ne peut pas, sans accroissement exagéré des coûts de maintenance, être recommencée périodiquement pour tenir compte du vieillissement des produits ou de modifications dues aux conditions ambiantes (température notamment).

On peut aussi envisager d'utiliser des tables de correction qui, au lieu d'être établies à partir d'images figées (mires d'échelles de gris), sont établies directement, en mode dynamique, au fur et à mesure de l'utilisation du capteur d'image, à partir des images réellement observées par le capteur. La table n'est donc pas contenue dans une mémoire morte puisque son contenu est en permanence remis en cause par l'utilisation du capteur. L'observation de discontinuités de l'image pour un niveau de luminance présent à la frontière entre les deux demi-images, mène à introduire dans la table, pour cette valeur de niveau de luminance, un coefficient de correction visant à éliminer cette discontinuité.

Cependant, les solutions indiquées ci-dessus ne donnent pas entièrement satisfaction du point de vue des performances de la correction, ou bien elles nécessitent des algorithmes de correction trop complexes. La présente invention a donc pour but de proposer un dispositif de prise d'image qui ne présente pas les inconvénients des dispositifs de l'art antérieur ou des dispositifs utilisant des tables de correction telles que décrites ci-dessus, et qui corrige efficacement les différences des voies de traitement des différentes zones d'une image.

Les publications de brevets EP 1 111 909 (publié après la date de priorité de cette demande), US 6 072 603, et US 5 737 015 décrivent différentes méthodes et algorithmes de détection.

L'invention repose en particulier sur les remarques suivantes et sur les conséquences statistiques qu'on peut en tirer :
- si on observe les couples de points d'image situés immédiatement de part et d'autre de la frontière entre deux zones, deux points adjacents d'un couple devraient avoir le plus souvent des niveaux de luminance pratiquement identiques, et ceci quel que soit le type d'image naturelle observée ; ou mieux encore, si on constate qu'un gradient de luminance existe à proximité immédiate d'une frontière, le niveau d'un côté de la frontière devrait pouvoir se déduire facilement du gradient observé de l'autre côté ;
- le long de la frontière sur une même image, les niveaux de signal sont divers et variés, de sorte qu'une seule image permet a priori d'établir des corrections pour une série de niveaux différents ;
- sur plusieurs images, les niveaux sont encore différents et permettent a priori d'établir encore d'autres niveaux de correction ;
- les corrections qu'on veut établir sont des corrections de systèmes physiques matériels analogiques : elles devraient correspondre à une courbe de correction lisse (sans zones abruptes, sans discontinuités) et monotone, de sorte que si on détecte la nécessité d'une correction pour un certain niveau de signal, il faut sans doute aussi corriger les niveaux voisins ;

De ces remarques, on a tiré selon la présente invention l'idée qu'il est possible d'établir une table de correction à partir de l'examen des points adjacents à la frontière entre zones (points frontaliers), par un processus itératif qui utilise les points tels qu'ils sont (pas besoin de mire), en détectant la nécessité d'une correction pour un niveau de signal (nécessité repérée par l'examen d'un couple de points frontaliers ayant ce niveau de luminance) et en apportant alors une petite correction non seulement pour ce niveau mais aussi pour les niveaux voisins (de préférence pour une large gamme de -niveaux voisins, voire même pour l'ensemble de la table), et en réitérant la détection et la correction pour d'autres couples de points frontaliers de la même image ou d'images ultérieures, correspondant à d'autres niveaux de signal.

On propose donc selon l'invention un procédé de traitement d'une image issue d'un capteur divisé en au moins deux zones associées à des voies de traitement différentes, en vue d'éliminer les défauts dus aux différences entre ces voies, dans lequel une zone est considérée comme zone de référence et la voie de traitement associée est considérée comme voie de référence, et une autre voie, dite voie à corriger, comporte une table de correction faisant correspondre à chaque niveau de signal en entrée de la table, un niveau corrigé en sortie de la table, caractérisé en ce que la table de correction est modifiée d'une manière itérative, lors de chaque nouvelle utilisation du capteur, selon les étapes suivantes :
- mesure de niveaux de signal issu des voies de traitement pour un groupe de points frontaliers autour de la frontière entre les deux zones,
- détermination d'une divergence anormale entre les mesures de part et d'autre de la frontière, cette divergence étant la conséquence d'une correction inadéquate d'un niveau en entrée de la table,
- mise en mémoire de nouvelles valeurs dans la table de correction pour une série de niveaux d'entrée de la table de correction autour du niveau pour lequel la correction est inadéquate,
- et réitération de ces étapes pour d'autres groupes de points frontaliers.

La réitération est faite selon l'invention avec un algorithme progressivement convergent, c'est-à-dire que les corrections effectuées sont assez petites pour aboutir à une table progressivement stabilisée.

La divergence anormale peut être estimée de deux manières particulièrement simples, d'autres solutions plus complexes pouvant aussi être envisagées :
- la première consiste à considérer que deux points adjacents dans une image réelle doivent, au moins statistiquement, avoir la même valeur. La divergence est alors la différence entre les niveaux mesurés pour les deux points en sortie des deux voies de traitement.
- la deuxième consiste à considérer que toute image est constituée de gradients locaux de niveaux, et que donc, s'il y a un gradient dans une zone au niveau de points proches de la frontière, le niveau de l'autre côté de la frontière devrait suivre ce gradient ; l'écart détecté est alors l'écart entre la valeur de signal pour un point d'un côté de la frontière et la valeur qu'il devrait avoir par extrapolation du gradient mesuré de l'autre côté de la frontière.

Une valeur de correction, égale à une fraction de la divergence déterminée, sera ajoutée au contenu précédent de la table de correction pour une série de niveaux d'entrée de la table autour du niveau pour lequel la correction est inadéquate, à la fois au dessus et au dessous de ce niveau. La correction pourra être dégressive en fonction de l'éloignement par rapport à ce niveau.

Dans une réalisation particulière, la correction est dégressive pour les valeurs d'entrée de la table situées au dessous de ce niveau, mais constante pour les valeurs situées au dessus.

La correction envisagée dans la table sera de préférence une correction pour tous les niveaux de la table. Elle sera de préférence au maximum d'une petite fraction (par exemple un vingtième ou un centième) de la divergence constatée, pour ne pas risquer des modifications brutales et oscillatoires du contenu de la table, et pour au contraire arriver progressivement à une convergence vers un contenu stable de la table.

Enfin, le procédé comprend de préférence des étapes de vérification de la monotonie de la table de correction, et également des étapes de lissage du contenu de la table.

Pour une image divisée en deux zones latérales, droite et gauche, les couples de points frontaliers seront pris sur une même ligne : un couple comprendra le dernier point de la première zone et le premier point de la deuxième zone. Pour une image divisée en deux zones superposées, haute et basse, les couples de points frontaliers comprendront deux points d'une même position de colonne, l'un dans la dernière ligne de la première zone et l'autre dans la première ligne de la deuxième zone. Pour une image divisée en quatre quadrants, haut, bas, droit, gauche, on comprendra que les zones frontalières peuvent être choisies de plusieurs manières, et qu'une zone- considérée - comme à corriger vis-à-vis d'une zone de référence (et comportant donc déjà une table de correction dans sa voie de traitement) peut être considérée comme zone de référence pour une autre zone.

En correspondance avec le procédé défini ci-dessus, l'invention propose un dispositif de prise d'image électronique, utilisant un capteur d'image matriciel divisé en au moins deux zones et fournissant une valeur numérique pour chaque point d'image, cette valeur numérique étant élaborée dans une première voie de traitement pour les points de la première zone et dans une deuxième voie de traitement pour les points de la deuxième zone, les voies de traitement étant au moins en partie distinctes, la deuxième voie de traitement au moins étant pourvue de moyens d'équilibrage pour éliminer les défauts visibles engendrés par les petites différences existant entre les deux voies de traitement, les moyens d'équilibrage comportant une table de conversion numérique faisant correspondre à chaque valeur numérique possible bᵢ à l'entrée de la table une autre valeur numérique b'ᵢ minimisant l'influence des différences entre voies, et des moyens pour modifier dynamiquement le contenu de cette table à partir d'une analyse d'une divergence entre d'une part les valeurs numériques des signaux issus d'une voie de traitement et correspondant à des points frontaliers situés d'un côté de la frontière entre les zones et d'autre part les valeurs numériques des signaux issus de l'autre voie de traitement et correspondant à des points frontaliers situés de l'autre côté de la frontière, pour une image quelconque observée en cours d'utilisation du dispositif, la modification étant effectuée pour toute une série de valeurs de luminance autour d'une valeur de luminance pour laquelle une divergence est constatée.

Les modifications de la table se font à partir des images réelles, selon un processus itératif convergent.

Le dispositif comprend de préférence soit un moyen de calcul de l'écart entre les valeurs mesurées pour les deux points, soit un moyen de calcul de l'écart entre d'une part un point d'un côté de la frontière et d'autre part une prédiction de valeur de ce point à partir de quelques points situés de l'autre côté de la frontière (en principe la prédiction sera une simple extrapolation linéaire).

Le dispositif comprend encore de préférence un moyen pour écrire systématiquement des valeurs corrigées dans une série de points d'adresse i de la table autour d'une valeur courante de signal mesurée. Il comporte aussi un moyen de calcul d'une correction à apporter aux valeurs précédemment stockées dans la table à ces adresses i, ce moyen étant apte à fournir comme valeur de correction une fraction de la divergence trouvée entre les points frontaliers. La fraction est de préférence un pourcentage fixe de la divergence, pour les valeurs d'entrée i situées au dessus d'une valeur déterminée, et un pourcentage variable de cet écart, inférieur ou égal au pourcentage fixe, pour toutes les valeurs situées au dessous de la valeur déterminée. Le pourcentage est de préférence d'autant plus faible qu'on s'éloigne, en valeur d'entrée dans la table, de la valeur courante mesurée qui a fait apparaître un écart entre voies de traitement.

La table de correction est une mémoire vive ou reprogrammable. Il est cependant possible qu'une mémoire morte soit associée à la table pour contenir une estimation préalable (par exemple faite en usine) des corrections à apporter à une voie ; mais le contenu de cette mémoire morte, chargé initialement dans une mémoire vive au début de chaque nouvelle utilisation du capteur, ne constituera que provisoirement le contenu de la table de correction, jusqu'à ce que celui-ci soit établi dynamiquement par l'utilisation du capteur, et ceci à partir d'images qui ne sont pas des mires de test mais les images réelles de l'utilisation.

D'autres caractéristiques et avantages de l'invention apparaîtront à la lecture de la description détaillée qui suit et qui est faite en référence aux dessins annexés dans lesquels :
- la figure 1 représente la structure générale d'un dispositif de prise d'image électronique à deux zones ;
- la figure 2 représente la structure générale d'un dispositif dans lequel des moyens d'équilibrage selon l'invention sont prévus ;
- la figure 3 représente le principe de calcul de divergence à la frontière pour l'établissement d'une correction de la table ;
- la figure 4 représente, d'une manière volontairement exagérée, le principe de correction de l'ensemble de la table en présence d'une divergence détectée entre les voies de traitement.

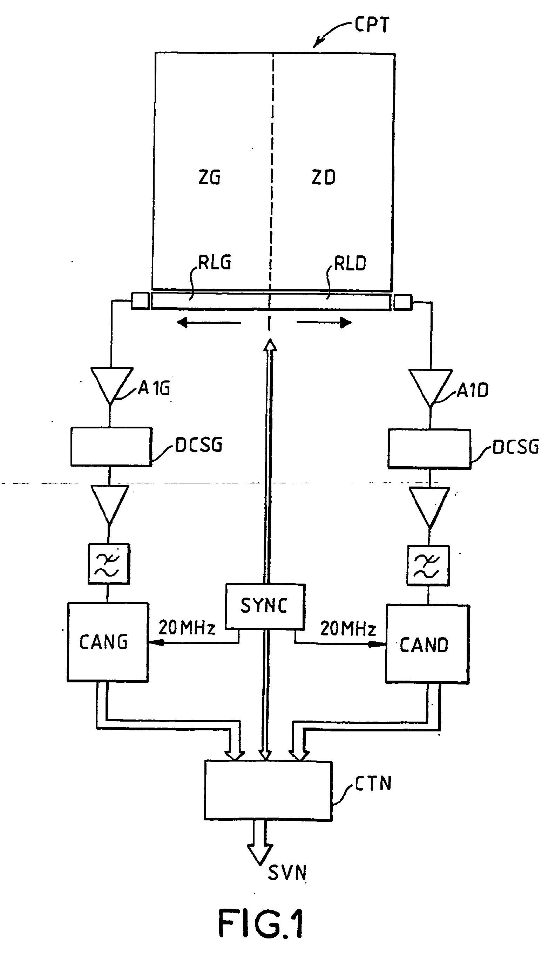

On rappelle sur la figure 1 la structure générale d'un dispositif de prise d'image -électronique dans lequel le capteur d'image proprement dit CPT comprend deux zones, dans cet exemple une zone droite ZD et une zone gauche ZG, les informations électroniques issues des deux zones étant traitées dans des voies séparées. Le capteur peut être un capteur d'image matriciel de petite dimension (capteur d'image intégré sur silicium, de type CCD ou CMOS notamment) ou de grande dimension (panneau radiologique à base de silicium amorphe sur plaques de verre de plusieurs dizaines de centimètres de côté par exemple).

Les voies de traitement droite et gauche comprennent par exemple chacune un registre de lecture séparé (RLD, RLG) suivi d'une diode de lecture respective, un amplificateur inverseur (A1D, A1G), un circuit d'échantillonnage (DCSG, DCSD) qui est en pratique un double échantillonneur corrélé, classique en matière de numérisation d'image vidéo, un amplificateur à gain variable, un filtre passe-bas, et enfin un convertisseur analogique-numérique (CAND, CANG). Les sorties des convertisseurs sont traitées dans un circuit de traitement numérique CTN dont une des fonctions est de regrouper les informations en provenance des deux voies pour établir en sortie un signal vidéo numérique SVN selon une norme souhaitée ; ce signal SVN correspond à l'image globale détectée par le capteur, sans distinction entre une zone droite et une zone gauche. Le circuit CTN peut avoir d'autres fonctions sans rapport avec la présente invention. Un circuit de synchronisation générale SYNC assure le cadencement de l'ensemble des circuits.

A titre d'exemple, le dispositif de prise d'image a une haute résolution, par exemple 1024 points x 1024 points, une grande dynamique, et une cadence de signaux de 20 MHz à la sortie, les convertisseurs fonctionnant à 20 MHz et codant les luminances sur 12 bits pour chaque point d'image.

Même si on essaye de réaliser des voies de traitement aussi symétriques que possible, des différences sont inévitables et un même niveau de luminance dans les deux zones donnera, en sortie des convertisseurs CANG et CAND, des valeurs numériques légèrement différentes. Et ces différences dépendront du niveau du signal, d'une manière en général non linéaire.

C'est pourquoi on va équilibrer les voies en considérant l'une d'elles-comme une voie de référence et en corrigeant l'autre.

On notera que l'invention permet d'équilibrer les voies non seulement dans le cas le plus simple où il n'y a que deux zones dans l'image et donc seulement deux voies de traitement distinctes, mais aussi dans le cas où il y a un nombre quelconque de zones. Dans ce cas, on peut considérer qu'une première zone A est une zone de référence et la voie de traitement correspondante est une voie de référence ; au moins une autre voie, correspondant à une deuxième zone B juxtaposée à la zone de référence est une voie à corriger par rapport à cette voie de référence mais peut elle-même constituer une voie de référence par rapport à une troisième voie à corriger, correspondant à une troisième zone adjacente à la deuxième zone, et ainsi de suite.

On expliquera donc l'invention en détail seulement à propos d'une division en deux zones ZD et ZG. La voie de traitement qui va servir de référence sera décrite comme ne comportant pas de table de correction de niveau, alors qu'elle pourrait en comporter s'il s'agissait d'une voie de référence secondaire elle-même corrigée par rapport à une autre référence primaire.

La correction sera mise en oeuvre dans le circuit CTN, avant regroupement en un seul signal vidéo SVN des signaux issus des zones gauche et droite.

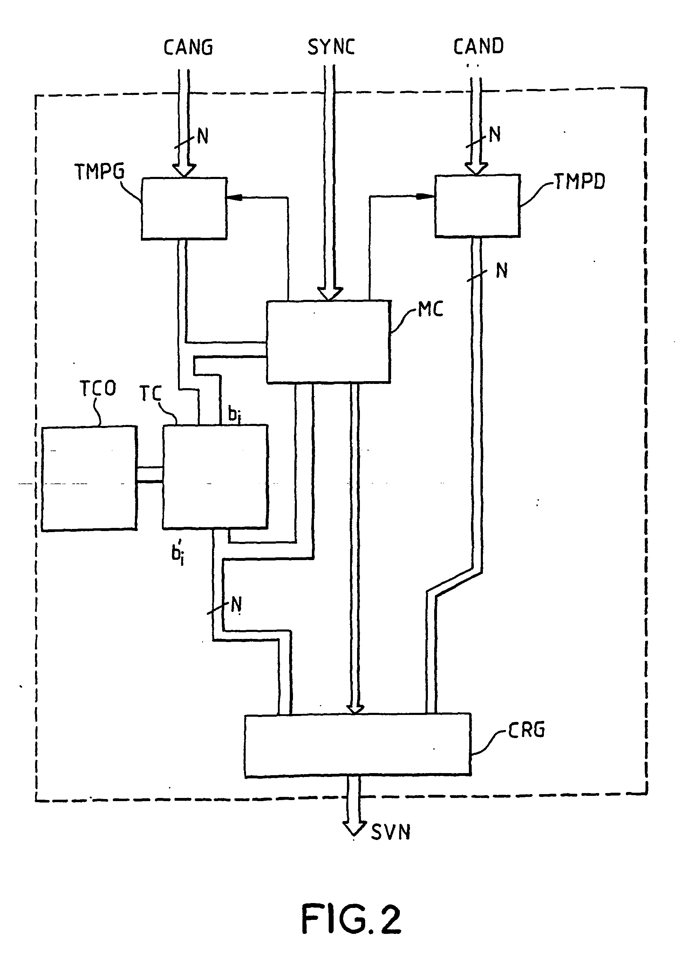

La structure du circuit de traitement de signal numérique CTN qui sert à la mise en oeuvre de l'invention est représentée à la figure 2 ; ce circuit reçoit les valeurs numériques issues des convertisseurs et représentant les luminances des points successifs de chaque zone d'image ; en principe les valeurs arrivent ligne par ligne, et, à l'intérieur d'une ligne, successivement point par point pour tous les points de la ligne. L'ordre est figé et on connaît donc à tout moment la position du point d'image pour lequel une valeur est reçue de l'un ou l'autre des convertisseurs. Les valeurs numériques sont codées sur N bits (par exemple N=12).

La voie droite est considérée comme référence et les signaux numériques d'image qui proviennent de cette voie sont envoyés, sans être modifiés, à un circuit de regroupement CRG. Les valeurs numériques des signaux de la voie gauche sont modifiés par une table de correction TC qui compense les différences entre les voies droite et gauche ; les valeurs numériques modifiées, toujours codées sur N bits comme si elles arrivaient directement du convertisseur CANG, sont envoyées au circuit de regroupement CRG. Le circuit CRG connaît les positions des points d'image qui arrivent respectivement de la voie droite et de la voie gauche à tout moment et remet les signaux dans l'ordre qui convient pour produire le signal vidéo numérique global SVN.

Des mémoires tampons peuvent être prévues à différents endroits du circuit, pour stocker les valeurs numériques reçues ou transmises, selon les besoins de stockage temporaire nécessaires au fonctionnement du circuit. Typiquement, étant donné que le contenu de la table de correction doit être réactualisé à certains moments, on comprendra qu'une valeur numérique qui doit être corrigée par la table de correction doit patienter dans une mémoire tampon en amont de la table pendant toute la durée nécessaire à la réactualisation de la table. Des mémoires tampons TMPD et TMPG ont donc été représentées à titre d'exemple à l'entrée du circuit CTN, dans la voie droite et dans la voie gauche. La taille de ces mémoires tampon peut dépendre de la nature de la division entre zones : division gauche/droite ou division haut/bas. Des mémoires tampons adressables sélectivement ou des registres de stockage temporaires peuvent être prévus à d'autres endroits du circuit en fonction des besoins de temporisation nécessaires au fonctionnement du circuit.

Le rôle de la table de correction TC dans la voie de gauche est de faire correspondre une valeur corrigée, codée sur N bits, à chaque valeur numérique de signal, également codée sur N bits, qui se présente à l'entrée de la table. L'entrée d'adressage de la table de correction reçoit donc la valeur numérique bᵢ représentant le signal pour un point d'image donné. La table fournit à sa sortie le contenu b'ᵢ présent à cette adresse et ce contenu est une valeur numérique qui représente une valeur de signal corrigée, légèrement différente de la valeur d'entrée. Le contenu de la table est globalement tel que les non-linéarités de la voie de traitement gauche soient rendues aussi identiques que possible aux non-linéarités de la voie de référence droite. La table est une mémoire de travail volatile ; elle peut être chargée initialement à partir d'une mémoire non volatile TCO, au démarrage d'une prise de vue, comme on l'expliquera plus loin.

La table TC peut contenir à chaque adresse une donnée corrigée codée sur plus de N bits, ceci afin d'augmenter la précision des calculs intermédiaires servant à élaborer dynamiquement le contenu de la table ; mais dans son rôle de correction de la voie gauche, la table ne transmet vers le circuit CRG qu'une valeur codée sur N bits puisque le circuit de regroupement doit voir arriver des signaux semblables à ceux qu'il pourrait recevoir directement des convertisseurs CAND et CANG.

Un processeur MC sert à effectuer la modification dynamique du contenu de la table de correction TC, à partir des images réellement observées par le capteur, pour équilibrer le mieux possible les deux voies. Le processeur est un microcontrôleur programmable ou un processeur dédié, qui assure à la fois la gestion de lecture et d'écriture des mémoires et les calculs de correction du contenu de la table de correction. Il peut aussi commander le circuit de regroupement CRG. Le processeur reçoit les signaux de synchronisation nécessaires à la maîtrise du fonctionnement de l'ensemble.

L'établissement du contenu de la table de correction TC se fait selon un processus itératif, géré par le processeur, ce processus comprenant des opérations de calcul et des opérations d'écriture fréquente de nouvelles valeurs dans la table. Comme on effectue la remise à jour de la table au cours de l'utilisation réelle du capteur, il faut prévoir que le séquencement des opérations du processeur MC est tel que des opérations d'écriture dans la table TC ne perturbent pas la transmission des signaux d'image vers le circuit de regroupement CRG. Le contrôle des mémoires tampons TMPG et TMPD par le processeur MC aide à découpler les opérations de lecture et d'écriture de la table de correction.

Au démarrage d'une nouvelle prise de vue, le contenu de la mémoire non volatile TC0 est globalement placé dans la table volatile TC. Ce contenu représente de préférence une estimation provisoire réaliste des corrections à apporter au signal de la voie gauche. La table TC0 peut avoir été définie en usine au moyen de mesures faites à partir de mires de référence. Elle peut être aussi une table de correction neutre (table identité), c'est-à-dire faisant correspondre à chaque valeur d'entrée codée sur N bits une valeur de sortie égale à la valeur d'entrée. Enfin, on peut envisager aussi que la table de correction soit réalisée à l'aide d'une mémoire-non-volatile remplie à partir de la table de TC à la fin de l'utilisation précédente du capteur. Dans tous les cas, le chargement initial de la table TC à partir d'une table de valeurs proches du résultat final souhaité sert seulement à accélérer la procédure de convergence du contenu de la table vers un contenu stable, actualisé à chaque utilisation.

On va maintenant expliquer en détail comment la table de correction est remise à jour régulièrement en cours de fonctionnement normal à partir de l'analyse des points situés à la frontière des zones gauche et droite.

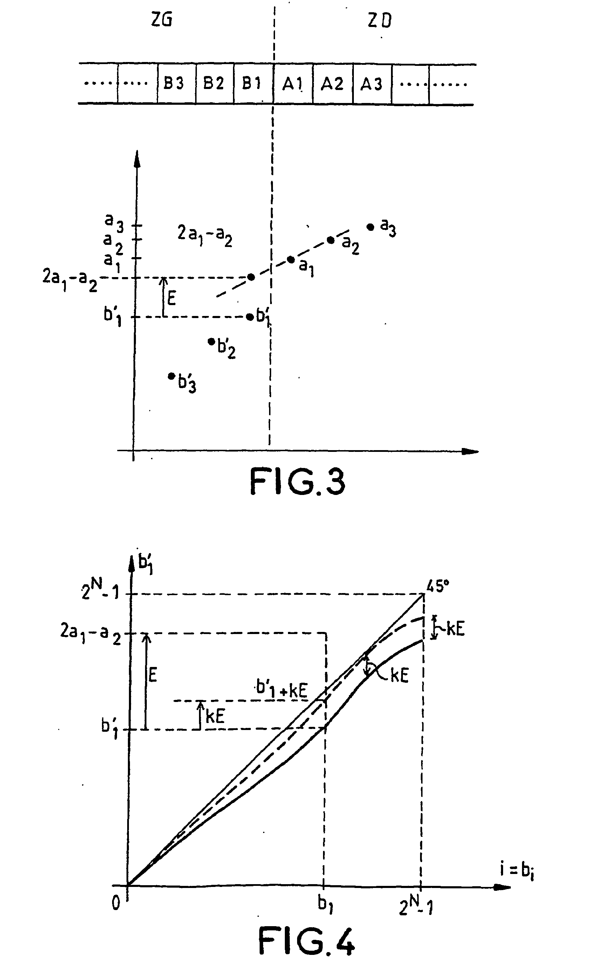

Sur la figure 3, on considère une série de points A3, A2, A1 de la zone droite, situés sur une ligne de points d'image, à proximité de la frontière entre zones, et une série de points B1, B2, B3 ... situés sur la même ligne de l'autre côté de la frontière, les points A1 et B1 étant les points frontaliers. Les convertisseurs fournissent des valeurs numériques a1, a2, a3, b1, b2, b3 pour ces points. Les valeurs b1, b2, b3 de la voie gauche sont transformées en valeurs b'1, b'2, b'3 par la table de correction TC. Les sorties des voies de traitement droite et gauche sont donc a1, a2, a3 et b'1, b'2, b'3.

Selon l'invention, on cherche à mesurer une divergence anormale E entre les mesures provenant des deux voies.

Selon une première méthode on pourrait utiliser simplement, comme mesure de la divergence, l'écart entre a1 et b'1, pour décider si la table de correction effectue une correction adéquate ou non pour le niveau b1 reçu par la table : un écart nul signifierait que la correction est adéquate pour le niveau b1. Cette méthode part de l'hypothèse réaliste que dans une image réelle deux points adjacents de l'image ont très souvent des valeurs identiques ; ceci parce que les luminances n'évoluent pas rapidement d'un point à un point voisin, surtout pour un capteur à haute résolution.

Cependant, pour améliorer encore la méthode, on préfère considérer une mesure de divergence un peu plus complexe, faisant intervenir le gradient de luminance présent dans l'image réelle à la frontière entre zone gauche et zone droite. On considère donc que si les valeurs a1 et a2 des points A2 et A1 montrent la présence d'un gradient de luminance, alors il est probable que le point B1 devrait se déduire par extrapolation linéaire à partir de ce gradient et avoir une valeur a1-(a2-a1) c'est-à-dire 2a1-a2. On revient d'ailleurs au cas précédent si les valeurs a1 et a2 sont égales (gradient nul).

La divergence mesurée est alors l'écart E = 2a1-a2-b'1 et c'est à partir de cet écart plutôt que de l'écart simple a1-b'1 qu'on détermine des corrections à apporter. On comprendra qu'on pourrait envisager aussi des mesures de divergence encore plus complexes, du deuxième ordre, faisant intervenir par exemple le point A3, ou faisant intervenir non seulement les points A2 et A3 mais aussi les points B2 et même B3, l'idée générale étant d'assurer une continuité de la courbe de luminance à la frontière ; dans le cas général, le calcul de l'écart E à partir de l'extrapolation linéaire des valeurs des points A2 et A1 est suffisant.

Quel que soit la manière dont on calcule la divergence E, on considère que si elle est nulle c'est que la table corrige bien le signal d'entrée lorsque ce signal a la valeur b1.

Si elle n'est pas nulle, c'est que la table ne corrige pas bien le signal lorsqu'il a la valeur b1. On en déduit donc une correction à apporter à la table TC, au moins à l'adresse d'entrée de valeur b1.

Mais, d'une part on ne se contente pas de corriger la table à l'adresse b1 ; bien au contraire on corrige la table pour toute une série d'adresses autour de b1, et même, de préférence, on corrige toute la table à partir de l'écart détecté pour la valeur b1.

Et d'autre part, la correction de la table ne consiste pas à ajouter au contenu b'1 présent à l'adresse b1 l'écart détecté E, pour annuler cet écart pour le niveau b1, mais elle consiste à ajouter seulement une petite fraction de cet écart. La raison en est qu'on souhaite réaliser une procédure itérative convergente pour aboutir d'une manière progressive à un contenu stable de la table pour toutes ses adresses.

La procédure établit donc une petite correction de la table à partir de la mesure d'écart pour un couple de points frontaliers A1, B1. Cette procédure est réitérée pour un autre couple de points de la même image ou des images suivantes. Cet autre couple correspondra peut-être à un autre niveau de luminance en entrée de la table TC. Une petite correction sera apportée à la table pour ce nouveau niveau de luminance et pour les niveaux voisins, ou même pour toute la table.

Les images étant réelles, on compte sur le fait que statistiquement on rencontrera dans l'image en cours ou dans les images suivantes des niveaux de luminance correspondant à peu près à toute la gamme de valeurs possibles entre le noir et le blanc. Et on compte sur le fait que la correction jugée nécessaire pour un niveau de signal b1 va induire des corrections presque identiques sur les niveaux voisins de sorte qu'il n'est pas nécessaire de s'assurer que tous les niveaux d'entrée b1 possibles ont bien fait l'objet d'une détection à la frontière.

La procédure de correction de toute la table à partir de la détection d'un écart détecté pour un niveau b1 est de préférence la suivante :

Si un écart E(b1) est détecté pour un niveau de signal b1 à l'entrée de la table, c'est-à-dire pour une adresse b1 de la table, on corrige séquentiellement le contenu de la table à toutes les adresses i = bᵢ, où i est un indice variant de 0 à 2^{N} - 1, selon la procédure séquentielle qui va être indiquée ci-dessous et qui dépend du signe de l'écart E(b1). On notera qu'on pourrait envisager de ne corriger qu'une partie de la table autour des adresses d'entrée b1, mais la correction de toute la table donne satisfaction et a l'avantage d'être systématique.
a) si l'écart E(b1) est négatif (b'1 est plus élevé que ce qu'il devrait être et il faut donc baisser le contenu de la table à l'adresse b1) ; la correction de la table est faite dans l'ordre croissant de 0 à 2^{N}-1 des adresses i = bᵢ de la table (pour des raisons de contrôle de la monotonie de la table, comme on l'expliquera plus loin) et elle est la suivante :
   - pour chaque i croissant de 0 à b1, on ajoute au contenu précédent b'ᵢ de la table à l'adresse i la valeur dEᵢ = k.E(b1).i/b1 pour obtenir une nouvelle valeur b'ᵢ à cette adresse ; k est un coefficient multiplicateur de faible valeur, par exemple 0,05 ou moins, permettant d'effectuer des corrections progressives et non brutales pour aboutir d'une manière convergente, sans oscillations, à une table stable ; le coefficient k représente le fait que même si on constate un déséquilibre E entre zones, on ne corrige qu'une fraction kE de ce déséquilibre. Le déséquilibre se réduira progressivement au fur et à mesure des itérations de l'écriture de la table. La valeur de k est un compromis entre stabilité de l'asservissement et rapidité d'établissement d'un contenu stable. De plus, pour ces valeurs de i inférieures à b1, la correction apportée n'est pas constante pour les différentes adresses, car on corrige le contenu de la table par une fraction très faible de E pour les faibles i et de plus en plus forte à mesure que i croît jusqu'à b1 : la correction apportée, égale à k.E(b1).i/b1, est proportionnelle à i et atteint k.E(b1) seulement pour i = b1.
   - pour i > b1, alors on ajoute au contenu précédent b'ᵢ de la table à l'adresse i bᵢ une correction constante dEᵢ = k.E(b1).
   - cependant, si dans la séquence on constate que le contenu b'ᵢ de la table à l'adresse i devient, du fait de la correction, inférieur au contenu b'ᵢ₋₁ à l'adresse i-1, alors on impose b'ᵢ = b'ᵢ₋₁. Ceci a pour but d'assurer la monotonie désirable de la table de correction, c'est-à-dire d'assurer que le contenu de la table à adresse quelconque n'est pas inférieur au contenu de la table à une adresse immédiatement précédente. C'est en raison de cette procédure de vérification de la monotonie de la table de correction qu'on effectue le calcul et l'écriture à des adresses prises dans l'ordre des i croissants lorsque l'écart E(b1) détecté est négatif.
b) si l'écart E(b1) est positif (b'1 est au dessous de ce qu'il devrait être), la table est corrigée cette fois dans l'ordre décroissant des adresses i de 2^{N}-1 à 0, toujours pour permettre une procédure assurant la monotonie de la table. Les mêmes corrections que ci-dessus sont apportées au contenu de la table selon que l'adresse i est soit supérieure à l'adresse b1 (la correction apportée est alors constante et égale à k.E(b1)) soit inférieure à l'adresse b1 (la correction est dégressive, égale à k.E(b1).i/b1 jusqu'à atteindre 0 pour i = 0).

Pour assurer la monotonie, on prévoit que si le calcul impliquait que le nouveau contenu à l'adresse i soit supérieur au contenu déterminé pour l'adresse i+1, alors on imposerait b'ᵢ = b'ᵢ₊₁.

Enfin, par sécurité, on peut imposer que si un contenu calculé est supérieur à 2^{N}-1, alors le contenu est écrêté à 2^{N}-1. Il n'y a pas de raison en effet que le signal sur une voie de traitement dépasse le niveau maximum pour lequel le signal est codé.

On comprend que les calculs de correction interviennent sur des petites valeurs numériques et ces petites valeurs sont ajoutées aux contenus présents dans la table. C'est pourquoi, comme on l'a mentionné plus haut, il est souhaitable que le contenu b'ᵢ de la table de correction soit codé sur un nombre de bits plus élevé que N, par exemple 2N) même si les N premiers bits seulement sont ensuite utilisés pour corriger la voie de traitement gauche.

Cet algorithme de calcul itératif du contenu de toute la table de correction pour un écart détecté suppose que le niveau du noir est correctement établi dans le capteur lui-même et qu'il n'y a pas besoin de le corriger ; cela veut dire que pour l'adresse d'entrée 0 de la table de correction, correspondant à un niveau noir en entrée, le contenu de la table est imposé à 0. Physiquement, la plupart des capteurs possèdent un système de fixation du niveau du noir (défini par des points d'image protégés de la lumière) à un potentiel imposé en entrée des convertisseurs analogiques-numériques, de sorte qu'il n'y a pas besoin d'un équilibrage des niveaux de noir des différentes voies de traitement. S'il y en avait besoin, l'invention serait utilisable également, mais l'algorithme de calcul de correction devrait en tenir compte.

La figure 4 illustre, d'une manière volontairement exagérée, la conséquence de la détection d'un écart E(b1) positif sur le contenu de la table. La courbe représente la différence entre les voies de traitement pour les différents niveaux de signal. Elle a en abscisse les adresses d'entrée i = bᵢ de la table de correction, donc les différents niveaux de signal numérique possibles, et en ordonnée la valeur corrigée b'ᵢ qui résulte des corrections. S'il n'y avait pas de différences dans les voies de traitement, la courbe serait une simple droite bissectrice à 45°. On suppose que pour un niveau de signal b1 à un point frontalier on détecte un écart E = 2a1-a2-b'1 positif. On calcule alors la fraction kE. On corrige toutes les valeurs de la table au dessous de b1 (et dans l'ordre croissant de 0 à b1 pour imposer la monotonie désirable de la courbe) en appliquant pour les adresses croissantes de 0 à b1 une correction croissante de 0 à kE. La courbe est donc remontée de kE mais d'une manière progressive, en passant toujours par zéro. Et on corrige toutes les valeurs de la table au dessus de b1 en remontant la courbe de kE. La courbe au dessus de b1 est entièrement remontée d'une valeur constante kE.

Lorsqu'un écart a été détecté pour un couple de points frontaliers, et que le contenu de la table a été entièrement revu en fonction de l'écart E détecté, on peut réitérer la procédure, mesurer l'écart pour un autre couple de points frontaliers de l'image, et modifier à nouveau la table. Au bout d'un certain nombre d'itérations, faisant intervenir des lignes d'image différentes (des lignes différentes de la même image puis des lignes différentes des images suivantes) donc des points frontaliers de niveaux différents, le contenu de la table se stabilise à peu près et les corrections apportées deviennent minimes. La stabilisation se produit en pratique en moins d'une seconde.

On prévoit enfin de préférence, pour conserver une bonne uniformité de l'échelle des niveaux de signal corrigés, de lisser de temps en temps le contenu de la table. L'algorithme de lissage peut consister tout simplement à prendre, pour toutes les adresses i de la table, trois ou cinq ou sept points consécutifs (adresses i-1, i, i+1 si on prend trois points), et à remplacer le contenu b'ᵢ à l'adresse i par une moyenne pondérée des contenus (b'ᵢ₋₁. b'ᵢ, b'ᵢ₋₁) de la table à ces adresses consécutives, par exemple remplacer b'ᵢ par (b'ᵢ₋₁+2b'ᵢ+b'ᵢ₊₁)/4 pour un lissage sur trois points.

Cette opération de lissage peut être effectuée de temps en temps, par exemple une seule fois pour 50 ou 100 étapes d'écriture de la table. Elle évite des irrégularités physiquement peu vraisemblables de la courbe de correction.

Etant donné que l'invention repose sur l'analyse de multiples couples de points frontaliers de l'image réelle, de manière que des détections d'écart E puissent être mesurées pour toute la gamme de niveaux de signal possibles, il faut que le système de calcul d'erreur, de calcul de correction, et d'écriture dans la table puisse traiter un grand nombre de couples de points frontaliers.

L'idéal serait de pouvoir faire une boucle de correction complète de la table à chaque ligne du signal vidéo (dans la configuration à deux zones latérales droite et gauche). On corrigerait ainsi toute la table avant la réception d'une autre ligne. Cela demande une rapidité de calcul très importante de la part du processeur.

On peut aussi prendre à la volée à la fin de chaque itération la première ligne qui se présente dans l'image en cours, faire le calcul, et recommencer pour une ligne suivante qui se présente quelle qu'elle soit. Petit à petit, toutes sortes de points frontaliers seront traités.

On peut aussi mesurer les écarts sur toutes les lignes d'une image en cours, en stockant les lignes dans une mémoire tampon, et en prenant le temps de les analyser une par une, le temps qu'il faut pour établir itérativement une table stable, même si pendant ce temps le signal du capteur continue à produire d'autres images. Cela permet de parcourir avec certitude toutes les lignes d'une image réelle, dans un ordre qu'on peut choisir et qui peut être pseudo-aléatoire plutôt qu'ordonné.

On peut également moyenner des mesures sur plusieurs lignes successives.

L'invention a été décrite à propos d'un capteur divisé en deux zones latérales, où les points frontaliers sont situés sur une même ligne. Les deux points frontaliers arrivent en même temps dans le circuit CTN, ce qui facilite le calcul de l'écart. Si la division était en une zone haute et une zone basse, les points frontaliers seraient sur une même colonne et sur deux lignes adjacentes. Le capteur comporterait alors en principe un registre de lecture en haut et un registre en bas, et les deux lignes adjacentes arriveraient en principe ensemble au circuit CTN.

## Revendications

1. Procédé de traitement d'une image issue d'un capteur (CPT) divisé en au moins deux zones (ZD, ZG) associées à des voies de traitement différentes, en vue d'éliminer les défauts dus aux différences entre ces voies, dans lequel une zone (ZD) est considérée comme zone de référence et la voie de traitement associée est considérée comme voie de référence, et une autre voie (ZG), dite voie à corriger, comporte une table de correction (TC) faisant correspondre à chaque niveau de signal (bᵢ) en entrée de la table, un niveau corrigé (b'ᵢ) en sortie de la table, **caractérisé en ce que** la table de correction est modifiée d'une manière itérative, lors de chaque nouvelle utilisation du capteur, selon les étapes suivantes :
- mesure de niveaux de signal (a2, a1, b'1) issu des voies de traitement pour un groupe de points frontaliers (A2, A1, B1) situés de part et d'autre de la frontière entre les deux zones, sur la même ligne du capteur,
- détermination d'une divergence anormale (E) entre les mesures (a2, a1, b'1) de part et d'autre de la frontière, cette divergence étant la conséquence d'une correction inadéquate d'un niveau (b1) en entrée de la table,
- mise en mémoire de nouvelles valeurs dans la table de correction pour une série de niveaux d'entrée (bᵢ) de la table de correction autour du niveau (b1) pour lequel la correction est inadéquate,
- et réitération de ces étapes pour d'autres groupes de points frontaliers.

2. Procédé selon la revendication 1, **caractérisé en ce que** la divergence est définie par l'écart E entre la valeur du signal (b'1) fourni par la voie à corriger pour un point frontalier (B1) et l'extrapolation des valeurs (a2, a1) fournies par la voie de référence pour des points voisins (A2, A1) situés de l'autre côté de la frontière.

3. Procédé selon l'une des revendications 1 et 2, **caractérisé en ce qu'**une valeur de correction égale à une fraction de la divergence déterminée (E) est ajoutée au contenu précédent de la table de correction pour une série de niveaux d'entrée (i) de la table autour du niveau (b1) pour laquelle la correction est inadéquate.

4. Procédé selon la revendication 3, **caractérisé en ce que** la correction apportée au contenu (b'ᵢ) de la table dépend du niveau d'entrée (i) dans la table, et est progressivement décroissante jusqu'à zéro pour des niveaux d'entrée décroissants au dessous du niveau (b1) pour lequel une divergence est constatée.

5. Procédé selon la revendication 4, **caractérisé en ce que** la correction apportée au contenu de la table est constante pour une série de niveaux d'entrée de la table qui sont supérieurs ou égaux au niveau (b1) pour lequel une divergence est constatée.

6. Procédé selon l'une des revendications 3 à 5, **caractérisé en ce qu'**une correction est apportée au contenu (b'ᵢ) de la table pour tous les niveaux d'entrée (i) de la table.

7. Dispositif de prise d'image électronique, utilisant un capteur d'image matriciel (CPT) divisé en au moins deux zones (ZD, ZG) et fournissant une valeur numérique pour chaque point d'image, cette valeur numérique étant élaborée dans une première voie de traitement pour les points de la première zone et dans une deuxième voie de traitement pour les points de la deuxième zone, les voies de traitement étant au moins en partie distinctes, la deuxième voie de traitement au moins étant pourvue de moyens d'équilibrage pour éliminer les défauts visibles engendrés par les petites différences existant entre les deux voies de traitement, **caractérisé en ce que** les moyens d'équilibrage comportent une table de conversion numérique (TC) faisant correspondre à chaque valeur numérique possible (bᵢ) de la deuxième voie une autre valeur numérique (b'ᵢ) minimisant l'influence des différences entre voies, et des moyens (MC) pour modifier dynamiquement le contenu de cette table à partir d'une analyse d'une divergence entre d'une part les valeurs numériques (a2, a1) des signaux issus d'une voie de traitement et correspondant à des points frontaliers (A2, A1) situés d'un côté de la frontière entre les zones et d'autre part les valeurs numériques (b'1) des signaux issus de l'autre voie de traitement et correspondant à des points frontaliers (B1) situés de l'autre côté de la frontière, les points (A2,A1,B1) étant sur la même ligne du capteur, pour une image quelconque observée en cours d'utilisation du dispositif, la modification étant effectuée pour toute une série de valeurs de luminance autour d'une valeur de luminance pour laquelle une divergence anormale est constatée, et réitérée pour d'autre groupes de points frontaliers.

8. Dispositif de prise d'image selon la revendication 7, **caractérisé en ce qu'**il comprend des moyens pour calculer une divergence E = 2a1-a2-b'1 à partir des valeurs numériques a2 et a1 issues d'une voie de traitement et correspondant à deux points d'un côté de la frontière et une valeur numérique b'1 issue de l'autre voie de traitement et correspondant à un point situé immédiatement de l'autre côté de la frontière.

9. Dispositif selon la revendication 8, **caractérisé en ce qu'**il comprend des moyens pour écrire dans la table de correction, pour une série de valeurs d'entrée i de la table, un contenu b'ᵢ corrigé par rapport au précédent contenu à la même adresse, la correction étant égale à une fraction kE de la divergence E.

10. Dispositif selon la revendication 9, **caractérisé en ce qu'**il comprend des moyens pour corriger le contenu b'ᵢ de la table d'une valeur kE pour les valeurs de i supérieures à b'ᵢ et d'une valeur progressivement décroissante à partir de kE pour les valeurs de i inférieures à b'ᵢ.

11. Dispositif selon la revendication 10, **caractérisé en ce qu'**il comprend des moyens pour corriger toute la table (TC) lorsqu'une divergence est détectée pour un groupe de points frontaliers.

## Claims

1. A method of processing an image arising from a sensor (CPT) divided into at least two zones (ZD, ZG) associated with different processing pathways, with a view to eliminating the defects due to the differences between these pathways, in which one zone (ZD) is regarded as reference zone and the associated processing pathway is regarded as reference pathway, and another pathway (ZG), the so-called pathway to be corrected, comprises a correction table (TC) matching each signal level (bᵢ) on input to the table, with a corrected level (b'ᵢ) on output from the table, **characterized in that** the correction table is modified iteratively, during each new use of the sensor, according to the following steps:
- measurement of signal levels (a2, a1, b'1) arising from the processing pathways for a group of border points (A1, A2, B1) situated on both sides of the border between the two zones,on the same sensor line,
- determination of an abnormal divergence (E) between the measurements (a2, a1, b'1) on either side of the border, this divergence being the consequence of an inappropriate correction of a level (b1) on input to the table,
- memory storage of new values in the correction table for a series of input levels (bᵢ) of the correction table around the level (b1) for which the correction is inappropriate,
- and repetition of these steps for other groups of border points.

2. The method as claimed in claim 1, **characterized in that** the divergence is defined by the discrepancy E between the value of the signal (b'1) supplied by the pathway to be corrected for a border point (B1) and the extrapolation of the values (a2, a1) supplied by the reference pathway for neighboring points (A2, A1) situated on the other side of the border.

3. The method as claimed in one of claims 1 and 2, **characterized in that** a correction value equal to a fraction of the determined divergence (E) is added to the previous content of the correction table for a series of input levels (i) of the table around the level (b1) for which the correction is inappropriate.

4. The method as claimed in claim 3, **characterized in that** the correction made to the content (b'ᵢ) of the table depends on the input level (i) in the table, and is progressively decreasing down to zero for input levels decreasing below the level (b1) for which a divergence is noted.

5. The method as claimed in claim 4, **characterized in that** the correction made to the content of the table is constant for a series of input levels of the table which are greater than or equal to the level (b1) for which a divergence is noted.

6. The method as claimed in one of claims 3 to 5, **characterized in that** a correction is made to the content (b'ᵢ) of the table for all the input levels (i) of the table.

7. A device for electronic image capture, using a matrix image sensor (CPT) divided into at least two zones (ZD, ZG) and supplying a digital value for each image point, this digital value being computed in a first processing pathway for the points of the first zone and in a second processing pathway for the points of the second zone, the processing pathways being at least partly distinct, the second processing pathway at least being provided with balancing means for eliminating the visible defects engendered by the small differences existing between the two processing pathways, **characterized in that** the balancing means comprise a digital conversion table (TC) matching each possible digital value (bᵢ) of the second pathway with another digital value (b'ᵢ) minimizing the influence of the differences between pathways, and means (MC) for dynamically modifying the content of this table on the basis of an analysis of a divergence between on the one hand the digital values (a2, a1) of the signals arising from one processing pathway and corresponding to border points (A2, A1) situated on one side of the border between the zones and on the other hand the digital values (b'1) of the signals arising from the other processing pathway and corresponding to border points (B1) situated on the other side of the border, points (A2, A1, B1) being on the same sensor line, for any image observed while using the device, the modification being performed for a whole series of luminance values around a luminance value for which an abnormal divergence is noted, and riterated for other groups of border points.

8. The device for image capture as claimed in claim 7, **characterized in that** it comprises means for calculating a divergence E = 2a1-a2-b'1 on the basis of the digital values a2 and a1 arising from a processing pathway and corresponding to two points on one side of the border and a digital value b'1 arising from the other processing pathway and corresponding to a point situated immediately on the other side of the border.

9. The device as claimed in claim 8, **characterized in that** it comprises means for writing to the correction table, for a series of input values i of the table, a content b'ᵢ corrected with respect to the previous content at the same address, the correction being equal to a fraction kE of the divergence E.

10. The device as claimed in claim 9, **characterized in that** it comprises means for correcting the content b'ᵢ of the table by a value kE for the values of i greater than b'ᵢ and by a value progressively decreasing from kE for the values of i less than b'ᵢ.

11. The device as claimed in claim 10, **characterized in that** it comprises means for correcting the whole table (TC) when a divergence is detected for a group of border points.

## Patentansprüche

1. Verfahren zum Verarbeiten eines Bildes von einem Sensor (CPT), der in wenigstens zwei mit unterschiedlichen Verarbeitungskanälen assoziierten Zonen (ZD, ZG) unterteilt ist, um Fehler aufgrund der Differenzen zwischen diesen Kanälen zu eliminieren, wobei eine Zone (ZD) als Referenzzone angesehen wird und der assoziierte Verarbeitungskanal als Referenzkanal angesehen wird, und ein anderer Kanal (ZG), zu korrigierender Kanal genannt, eine Korrekturtabelle (TC) umfasst, die bewirkt, dass jedem Signalpegel (bᵢ) am Eingang der Tabelle ein korrigierter Pegel (b'i) am Ausgang der Tabelle entspricht, **dadurch gekennzeichnet, dass** die Korrekturtabelle bei jeder neuen Benutzung des Sensors auf iterative Weise mit den folgenden Schritten modifiziert wird:
- Messen von Signalpegeln (a2, a1, b'1) von den Verarbeitungskanälen für eine Gruppe von Grenzpunkten (A2, A1, B1), die sich auf beiden Seiten der Grenze zwischen den beiden Zonen befinden, auf derselben Leitung des Sensors,
- Ermitteln einer anormalen Divergenz (E) zwischen den Messwerten (a2, a1, b'1) auf beiden Seiten der Grenze, wobei diese Divergenz die Folge einer unzureichenden Korrektur eines Pegels (b1) am Eingang der Tabelle ist,
- Speichern von neuen Werten in der Korrekturtabelle für eine Serie von Eingangspegeln (bᵢ) der Korrekturtabelle um den Pegel (b1), für den die Korrektur unzureichend ist,
- Wiederholen dieser Schritte für andere Gruppen von Grenzpunkten.

2. Verfahren nach Anspruch 1, **dadurch gekennzeichnet, dass** die Divergenz durch den Abstand E zwischen dem Wert des von dem zu korrigierenden Kanal für einen Grenzpunkt (B1) gelieferten Signals (b'1) und der Extrapolation der von dem Referenzkanal für Nachbarpunkte (A2, A1) gelieferten Werte (a2, a1), die sich auf der anderen Seite der Grenze befinden, definiert ist.

3. Verfahren nach einem der Ansprüche 1 und 2, **dadurch gekennzeichnet, dass** ein Korrekturwert, der gleich einem Bruchteil der ermittelten Divergenz (E) ist, zum vorherigen Inhalt der Korrekturtabelle für eine Serie von Eingangspegeln (i) der Tabelle um den Pegel (b1) herum hinzugefügt wird, für den die Korrektur unzureichend ist.

4. Verfahren nach Anspruch 3, **dadurch gekennzeichnet, dass** die am Inhalt (b'ᵢ) der Tabelle vorgenommene Korrektur vom Eingangspegel (i) in der Tabelle abhängig ist und progressiv bis auf null für die Eingangspegel abnimmt, die unter den Pegel (b1) abfallen, für den eine Divergenz festgestellt wird.

5. Verfahren nach Anspruch 4, **dadurch gekennzeichnet, dass** die am Inhalt der Tabelle vorgenommene Korrektur für eine Serie von Eingangspegeln der Tabelle konstant ist, die gleich oder größer als der Pegel (b1) sind, für den eine Divergenz festgestellt wird.

6. Verfahren nach einem der Ansprüche 3 bis 5, **dadurch gekennzeichnet, dass** eine Korrektur am Inhalt (b'ᵢ) der Tabelle für alle Eingangspegel (i) der Tabelle vorgenommen wird.

7. Vorrichtung zum Aufnehmen eines elektronischen Bildes, die einen Bildmatrixsensor (CPT) verwendet, der in wenigstens zwei Zonen (ZD, ZG) unterteilt ist und einen digitalen Wert für jeden Bildpunkt liefert, wobei dieser digitale Wert auf einem ersten Verarbeitungskanal für die Punkte der ersten Zone und auf einem zweiten Verarbeitungskanal für die Punkte der zweiten Zone ausgearbeitet wird, wobei die Verarbeitungskanäle wenigstens teilweise getrennt sind, wobei der zweite Verarbeitungskanal wenigstens mit Ausgleichsmitteln zum Eliminieren von sichtbaren Fehlern ausgestattet ist, die durch die zwischen den zwei Verarbeitungskanälen existierenden geringen Differenzen entstehen, **dadurch gekennzeichnet, dass** die Ausgleichsmittel Folgendes umfassen: eine digitale Umwandlungstabelle (TC), die bewirkt, dass jedem möglichen digitalen Wert (bᵢ) des zweiten Kanals ein anderer digitaler Wert (b'ᵢ) entspricht, der den Einfluss der Differenzen zwischen Kanälen minimiert, und Mittel (MC) zum dynamischen Modifizieren des Inhalts dieser Tabelle aufgrund einer Analyse einer Divergenz zwischen einerseits den digitalen Werten (a2, a1) der von einem Verarbeitungskanal kommenden Signalen, die sich auf einer Seite der Grenze zwischen den Zonen befindenden Grenzpunkten (A2, A1) entsprechen, und andererseits den digitalen Werten (b'1) der von dem anderen Verarbeitungskanal kommenden Signalen, die sich auf der anderen Seite der Grenze befindenden Grenzpunkten (B1) entsprechen, wobei sich die Punkte (A2, A1, B1) auf derselben Leitung des Sensors befinden, für ein beliebiges beobachtetes Bild im Laufe des Gebrauchs der Vorrichtung, wobei die Modifikation für eine ganze Serie von Luminanzwerten um einen Luminanzwert herum erfolgt, für den eine anormale Divergenz festgestellt wird, und für andere Gruppen von Grenzpunkten wiederholt wird.

8. Vorrichtung zum Aufnehmen eines Bildes nach Anspruch 7, **dadurch gekennzeichnet, dass** sie Mittel zum Berechnen einer Divergenz E = 2a1-a2-b'1 von den digitalen Werten a2 und a1, die von einem Verarbeitungskanal kommen und zwei Punkten von einer Seite der Grenze entsprechen, und einem digitalen Wert b'1 umfasst, der von dem anderen Verarbeitungskanal kommt und einem Punkt entspricht, der sich unmittelbar auf der anderen Seite der Grenze befindet.

9. Vorrichtung nach Anspruch 8, **dadurch gekennzeichnet, dass** sie Mittel umfasst, um für eine Reihe von Eingangswerten i der Tabelle einen Inhalt b'ᵢ in die Korrekturtabelle zu schreiben, der in Bezug auf den vorherigen Inhalt an derselben Adresse korrigiert wurde, wobei die Korrektur gleich einem Bruchteil kE der Divergenz E ist.

10. Vorrichtung nach Anspruch 9, **dadurch gekennzeichnet, dass** sie Mittel umfasst, um den Inhalt b'ᵢ der Tabelle eines Wertes kE für die Werte von i größer als b'ᵢ und eines progressiv abnehmenden Wertes von kE für die Werte von i kleiner als b'ᵢ zu korrigieren.

11. Vorrichtung nach Anspruch 10, **dadurch gekennzeichnet, dass** sie Mittel zum Korrigieren der gesamten Tabelle (TC) umfasst, wenn eine Divergenz für eine Gruppe von Grenzpunkten erkannt wird.
